# EUROPÄISCHE PATENTSCHRIFT

(11) **EP 2 311 314 B1**
(45) Veröffentlichungstag und Bekanntmachung des Hinweises auf die Patenterteilung: **14.03.2012**
(21) Anmeldenummer: 10175978.5
(22) Anmeldetag: 09.09.2010
(51) Int. Cl.: A01K 1/03

(54) **Kleintiergehege**
Enclosure for small animals
Enclos pour petits animaux

(30) Priorität: 14.10.2009 DE 102009045695
(43) Veröffentlichungstag der Anmeldung: 20.04.2011
(73) Patentinhaber: Albert Kerbl GmbH, 84428 Buchbach (DE)
(72) Erfinder: Kerbl, Albert, 84428, Buchbach (DE)
(74) Vertreter: Kalkoff & Partner

(56) Entgegenhaltungen:
- US-A1- 2007 012 258
- US-A1- 2008 277 638
- US-B1- 6 289 639
- US-B1- 7 562 453

## Beschreibung

Die Erfindung betrifft ein Kleintiergehege zurtemporären Bodenhaltung von Kleintieren im Freien, mit einer sich in der Gebrauchslage vom Boden aus in die Höhe erstreckenden Seitenwand, vgl. die US-A-2007/0012258.

Kleintiergehege der eingangs genannten Art sind in vielfältigen Ausgestaltungen aus dem Stand der Technik bekannt. In ihrer einfachsten Form sind die Kleintiergehege aus mehreren Drahtgittern gebildet, die, an ihren Seitenkanten miteinander verbunden, einen abgeschlossenen Raum bilden. Ein derartiges Kleintiergehege, bspw. nach Art eines Käfigs, kann dazu genutzt werden, um Kaninchen, Hasen oder dergleichen auch kurzzeitig im Freien, bspw. im Garten zu halten, ohne dass die Gefahr besteht, dass die Tiere flüchten.

Derartige Gehege weisen jedoch den Nachteil auf, dass diese, sofern sie keinen separaten Boden aufweisen, nur mit ihrer in der Gebrauchslage in der Regel im Wesentlichen vertikal verlaufenden Seitenwand auf dem Boden aufstehen. Dies ermöglicht es dem Kleintier - seinem Grabtrieb folgend - sich unter der Seitenwand hindurchzugraben. Darüber hinaus besteht ferner die Gefahr, dass Raubtiere, wie Füchse, Marder oder dergleichen sich ebenfalls durch Untergraben der Seitenwand Zugang zu den innerhalb des Geheges befindlichen Tieren verschaffen.

Der Erfindung liegt die Aufgabe zugrunde, ein Tiergehege bereitzustellen, welches ein Untergraben der Seitenwand verhindert.

Die Erfindung löst die Aufgabe durch ein Kleintiergehege mit den Merkmalen des Anspruchs 1. Vorteilhafte Weiterbildungen der Erfindung sind in den abhängigen Ansprüchen angegeben.

Das erfindungsgemäße Kleintiergehege bildet einen abgeschlossenen Innenraum, in dem die Kleintiere gehalten werden können. Grundsätzlich besteht die Möglichkeit, ein erfindungsgemäßes Kleintiergehege bereits durch eine, bspw. gebogene oder geknickte Seitenwand zu bilden, welche in sich nicht geschlossen ist. So kann zum Beispiel die Seitenwand derart an bestehende Baukörper, bspw. Gebäudewände oder Mauern angeordnet sein, dass diese gemeinsam mit der Seitenwand ein abgeschlossenes Gehege bilden. Vorteilhafterweise wird das Kleintiergehege jedoch in der Regel durch eine umlaufende, ringförmige Seitenwand gebildet.

Kennzeichnend für das erfindungsgemäße Kleintiergehege ist, dass die Seitenwand im Bereich ihres in der Gebrauchslage bodenseitigen Randes eine von der Seitenwand vorstehende Grabsperre aufweist. Die Grabsperre steht dabei im Rahmen der Erfindung von der Seitenwand vor, wenn sie im Bereich des in der Gebrauchslage unteren Rands sich unter einen Winkel zur Seitenwand an diese anschließt. Die Grabsperre erstreckt sich damit gemäß der Erfindung ausgehend von der Seitenwand in den Innenraum und/oder Außenbereich. Die Grabsperre bildet einen umlaufenden Rand der verhindert, dass die in dem Kleintiergehege befindlichen Tiere, und/oder im Falle eines außen umlaufenden Randes, sich Tiere von außen im Bereich vor der in der Gebrauchslage im Wesentlichen vertikal verlaufenden Seitenwand unter dieser hindurch graben.

Die Grabsperre, welche derart ausgebildet ist und insbesondere aus einem Material besteht, dass es den Tieren unmöglich macht, sich durch diese hindurchzugraben, nutzt dabei das Wissen über das Verhalten der Tiere aus. Nämlich dass diese, wenn sie sich unter einem Hindernis wie eine Seitenwand durchgraben wollen, hiermit unmittelbarvordem Hindernis beginnen. Durch die Grabsperre wird dieser Bereich jedoch vor derartigen Grabarbeiten geschützt. Nachdem die Kleintiere nicht zu der Erkenntnis gelangen, dass ein zusätzliches Untergraben der Grabsperre zum Erfolg führen könnte, sondern diese in jedem Fall unmittelbar vor der Seitenwand beginnen werden zu graben, schützt die Grabsperre zuverlässig davor, dass Kleintiere aus dem gebildeten Kleintiergehege herausgelangen bzw. unerwünschte Kleintiere von außen hineingelangen. Das erfindungsgemäße Kleintiergehege erlaubt es somit, die Kleintiere, bspw. Hasen oder Kaninchen auch zeitweise im Garten auf losem Untergrund, einer Rasenfläche, Sand oder dergleichen zu halten, ohne dass die Gefahr besteht, dass die Tiere flüchten oder ihnen durch Raubtiere Schaden zugefügt wird. Gleichzeitig wird den Kleintieren die Möglichkeit gegeben, sich in einer natürlichen Umgebung und nicht auf einem künstlichen Untergrund zu bewegen.

Wie bereits eingangs dargestellt, kann die Grabsperre sowohl einer- als auch beiderseits der Seitenwand von dieser vorstehen, wobei bevorzugt zumindest eine in den Innenraum vorstehende Grabsperre vorgesehen ist, um zu gewährleisten, dass die Kleintiere nicht aus dem gebildeten Kleintiergehege herausgelangen. Nach einer vorteilhaften Weiterbildung der Erfindung steht die Grabsperre jedoch auch beiderseits der Seitenwand von dieser vor. Neben dem zuvor erläuterten zusätzlichen Schutz der im Kleintiergehege angeordneten Kleintiere vor sich von außen unter der Seitenwand durchgrabender Raubtiere, weist diese Ausgestaltung der Erfindung den Vorteil auf, dass die Standsicherheit der Seitenwand und des aus der Seitenwand gebildeten Kleintiergeheges in ergänzender Weise gesteigert wird, nachdem die Anzahl der Auflagepunkte der Seitenwand hierdurch gesteigert wird.

Die Anordnung der Grabsperre an der Seitenwand ist grundsätzlich frei wählbar, wobei die Grabsperre nicht zwangsläufig mit der Seitenwand verbunden sein muss. Denkbar ist bspw. die Verwendung einer separaten, an die Form des Geheges angepassten Grabsperre, die in das Gehege eingelegt wird und umlaufend einen Bereich vor der Seitenwand überdeckt. Nach einer vorteilhaften Ausgestaltung der Erfindung ist die Grabsperre jedoch einstückig mit der Seitenwand ausgebildet. Dies kann bspw. durch Umbiegen oder Umknicken eines Endbereichs der Seitenwand erfolgen. Die einstückige Ausgestaltung der Erfindung weist den Vorteil auf, dass keine Anschlussprobleme der Seitenwand an die Grabsperre auftreten. Sie lässt sich überdies besonders einfach und kostengünstig herstellen und weist ferner den Vorteil auf, dass die Grabsperre aus dem gleichen Material wie die Seitenwand besteht, wodurch ein optisch einheitlicher Eindruck erweckt wird.

Nach einer alternativen Ausgestaltung der Erfindung kann die Grabsperre jedoch auch lösbar mit der Seitenwand verbunden sein. Diese Weiterbildung der Erfindung ermöglicht eine besonders platzsparende Aufbewahrung der Seitenwand bzw. des Kleintiergeheges im Falle des Nichtgebrauches, nachdem die Grabsperre zur Aufbewahrung von der Seitenwand gelöst werden kann. Zudem besteht, wie auch bei der Verwendung einer separaten Grabsperre, die Möglichkeit der Kombination unterschiedlicher Materialien für die Seitenwand und die Grabsperre, die auch in ihrer Form entsprechend ihren unterschiedlichen Anforderungsprofilen wie Festigkeit, Witterungsbeständigkeit, Optik etc. ausgewählt werden können, wodurch sich eine ergänzende Kostenreduzierung ergeben kann. Zur lösbaren Verbindung eignen sich Clips, Verschraubungen, Klammern oder dergleichen.

Gemäß der Erfindung ist die Grabsperre gelenkig mit der Seitenwand verbunden. Dies ermöglicht eine platzsparende Aufbewahrung, indem die Grabsperre an die Seitenwand anklappbar ist. Gleichzeitig verbleibt die Grabsperre jedoch auch in einer Nichtgebrauchsposition des Kleintiergeheges an der Seitenwand, so dass einem Verlust der Grabsperre wirkungsvoll vorgebeugt wird. Im Falle einer vorteilhafterweise vorzusehenden Arretierung der Grabsperre in einer Gebrauchsposition wird zudem erreicht, dass die Seitenwand in ihrer Gebrauchsposition eine erhöhte Stabilität aufweist.

Die Auswahl des Materials für die Grabsperre kann grundsätzlich, insbesondere im Fall einer lösbaren Verbindung mit der Seitenwand oder der Verwendung einer separaten Grabsperre, in beliebiger Weise erfolgen. Denkbar ist bspw. die Verwendung einer durchgehenden Folie oder starrer Materialien wie Holz, Metall oder Kunststoff oder einer Kombination dieser Materialien. Nach einer besonders vorteilhaften Ausgestaltung der Erfindung ist die Grabsperre jedoch durch ein Drahtgitter gebildet. Dieses zeichnet sich dadurch aus, dass es sowohl einen zuverlässigen Schutz vor einem Untergraben bildet, gleichzeitig aber eine Gewichtsreduzierung gegenüber Vollkörpern bietet. Insbesondere bei der Anordnung auf einem Rasen ergibt sich durch das Gitter eine weitere verbesserte Standsicherheit und insbesondere eine Sicherheit gegen Verschieben durch ein Verhaken es Untergrundes in den Gitterzwischenräumen, bspw. von Grashalmen die durch die Gitterzwischenräume hindurchragen.

Die Grabsperre kann grundsätzlich einstückig ausgebildet sein. Im Falle der Verwendung mehrerer miteinander zu verbindender Grabsperren zu einer einzigen Grabsperre, bspw. bei der Verwendung mehrerer Seitenwandelemente zur Herstellung eines Kleintiergeheges, sind die Grabsperren nach einer vorteilhaften Weiterbildung der Erfindung im Bereich ihrer Enden mit einer in der Gebrauchslage benachbart angeordneten Grabsperre in Eingriff bringbar ausgebildet. Hierdurch kann eine zusammenhängende Grabsperre gebildet werden. Diese Ausgestaltung der Erfindung ermöglicht es, die Stabilität des aus den Seitenwänden gebildeten Kleintiergeheges in ergänzender Weise zu steigern. Zudem wird verhindert, dass ein Bereich besteht, der nicht durch die Grabsperre abgedeckt ist und der es einem Kleintier möglicherweise erlauben würde, sich unter der Seitenwand hindurchzugraben. Die Art der Verbindung der Grabsperre kann dabei beliebig ausgebildet sein. Denkbar sind bspw. Splinte, Klammern, Verschraubungen etc. Möglich ist auch die Ausgestaltung der Kontaktbereiche mit aufeinander abgestimmten Anschlussmitteln.

Die Form der Seitenwand kann grundsätzlich in beliebiger Weise ausgestaltet sein. Wie eingangs dargestellt, besteht bspw. die Möglichkeit, eine gebogene oder geknickte offene Seitenwand zur Herstellung eines Kleintiergeheges zu verwenden. Deren Einsatz ist bspw. dann möglich, wenn diese Seitenwand mit ihrem offenen Bereich an eine feste Gebäudewand angesetzt oder an eine Mauer angelehnt wird. Nach einer besonders vorteilhaften Ausgestaltung der Erfindung ist die Seitenwand jedoch zu einem umlaufenden Ring gebogen und/oder geknickt. Diese Ausgestaltung der Erfindung ermöglicht es, das derart weitergebildete Kleintiergehege an beliebiger Stelle, bspw. im Garten, zu platzieren. Die einstückige Ausbildung der Seitenwand zeichnet sich dabei durch ihre hohe Festigkeit aus und es besteht nicht die Notwendigkeit der Herstellung der Verbindung verschiedener Einzelteile zur Herstellung des Kleintiergeheges. Es ist lediglich erforderlich die Enden der Seitenwand zu verbinden, um einen abgeschlossenen Ring zu bilden. Dies kann in bekannter Weise, bspw. durch Verschraubungen erfolgen.

Nach einer weiteren Ausgestaltung der Erfindung ist die Seitenwand aus mindestens zwei lösbar miteinander verbundenen Seitenwandelementen gebildet. Diese Ausgestaltung der Erfindung, bei der die Seitenwandelemente sowohl derart ausgebildet sein können, dass sie gemeinsam einen geschlossenen Ring bilden aber auch derart, dass sie einen offenen, bspw. durch eine Mauer zu schließenden Bereich aufweisen, zeichnet sich dabei dadurch aus, dass die zur Herstellung des Kleintiergeheges verwendbare Seitenwand besonders platzsparend im Falle ihres Nichtgebrauchs gelagert werden kann. Hierzu ist es lediglich erforderlich, die Seitenwandelemente voneinander zu lösen, wobei diese besonders vorteilhafterweise dann stapelbar ausgebildet sind. Im Falle der Bildung eines geschlossenen Kleintiergeheges können die beiden Seitenwandelemente bspw. derart gebogen sein, dass diese im verbundenen Zustand einen ringförmigen, bspw. ovalen, eckigen, polygonalen oder kreisförmigen Innenraum schaffen.

Nach einer weiteren Ausgestaltung der Erfindung ist die Seitenwand aus mindestens drei, vorzugsweise vier rechteckigen Seitenwandelementen gebildet, die lösbar miteinander verbunden sind. Diese Ausgestaltung der Erfindung gewährleistet in besonders zuverlässiger Weise eine gute Stapelbarkeit der Seitenwandelemente in der Nichtgebrauchslage, die besonders vorteilhafterweise aus einem Drahtgitter gebildet sind. Zur Herstellung des Kleintiergeheges ist es lediglich erforderlich, die Seitenwandelemente bspw. durch Metallstäbe, Clipse oder dergleichen lösbar miteinander zu verbinden. Die einzelnen, an den Seitenwandelementen angeordneten Grabsperren sind dabei vorteilhafterweise derart ausgebildet, dass sie in der Gebrauchslage einen flächig umlaufenden Rand bilden, wobei sie besonders vorteilhafterweise an ihren Enden lösbar miteinander verbindbar sind. Im Falle der Verwendung von einem Drahtgitter zur Herstellung der Seitenwandelemente und Grabsperre ergibt sich zudem eine Gewichtsreduzierung.

Der Verlauf der Grabsperre an der Seitenwand ist grundsätzlich frei wählbar. So kann die Grabsperre bspw. in einem Bereich oberhalb eines in der Gebrauchslage unteren Randes der Seitenwand mit dieser verbunden sein, wobei er sich dann schräg zum Boden hin erstreckt. Besonders vorteilhafterweise ist die Grabsperre jedoch am unteren Rand der Seitenwand angeordnet und schließt an diesen an, so dass sich die Grabsperre im Wesentlichen senkrecht zur Seitenwand und in der Gebrauchslage im Wesentlichen horizontal zum Boden erstreckt, so dass die Grabsperre flächig auf dem Boden aufliegt. Diese Ausgestaltung der Erfindung gewährleistet dabei in besonderem Maße eine hohe Standfestigkeit und beugt Verletzungen der in dem Gehege angeordneten Kleintiere in besonders zuverlässiger Weise vor. Die Tiefe der Grabsperre, d. h. der Abstand der freien,vorzugsweise im Wesentlichen parallel zur Seitenwand verlaufenden Kante der Grabsperre zur Seitenwand beträgt vorzugsweise 1-15 cm, bevorzugt 2-10 cm, besonders bevorzugt 3-7 cm.

Ausführungsbeispiele der Erfindung sind nachstehend mit Bezug auf die Zeichnungen näher erläutert. In den Zeichnungen zeigen:
- Fig. 1: eine perspektivische Ansicht einer ersten Ausführungsform eines Kleintiergeheges;
- Fig. 2: eine Detailansicht einer Ecke des Kleintiergeheges von Fig. 1;
- Fig. 3: eine perspektivische Ansicht einer zweiten Ausführungsform des Kleintiergeheges
- Fig. 4: eine Detailansicht einer Ecke des Kleintiergeheges von Fig. 3;
- Fig. 5: eine perspektivische Ansicht einer dritten Ausführungsform eines Kleintiergeheges und
- Fig. 6: eine Detailansicht einer Ecke des Kleintiergeheges von Fig. 5.

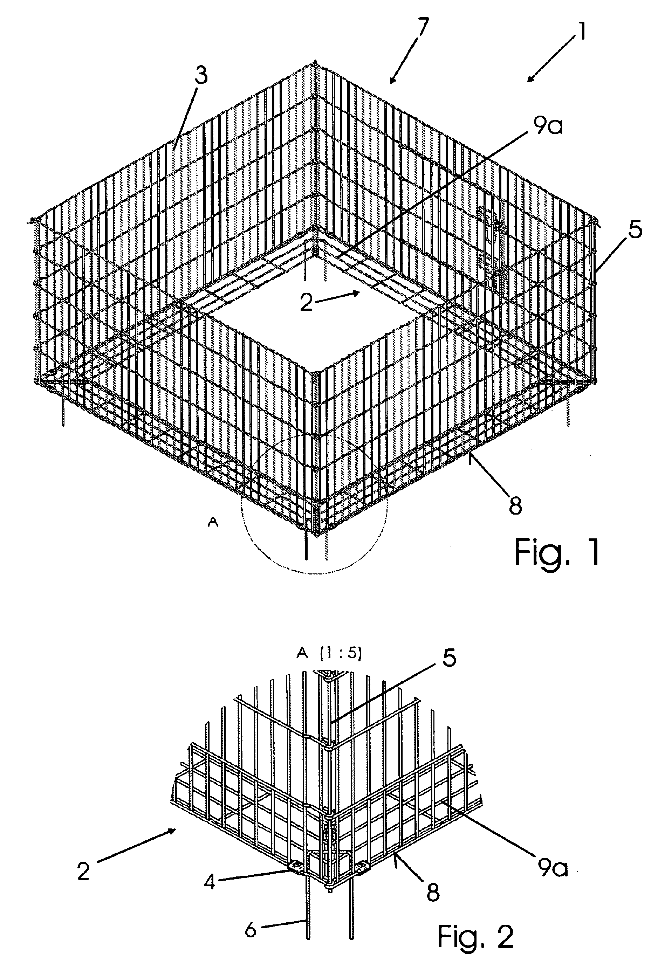

In Figur 1 ist in einer perspektivischen Ansicht ein Kleintiergehege 1 dargestellt. Eine umlaufende Seitenwand 7 des Kleintiergeheges 1 wird dabei durch vier Seitenwandelemente 3 gebildet, welche aus rechteckigen Drahtelementen geformt sind. Die Seitenwandelemente 3 sind entlang ihrer in der Gebrauchslage vertikal verlaufenden Kanten mittels einer Verbindungsstange 5 derart miteinander verbunden, dass sie einen abgeschlossenen Innenraum bilden.

Im Bereich eines unteren Randes 8 der Seitenwandelemente 3 weisen diese eine in Richtung des Innenraums vorstehende Grabsperre 2 auf, die durch einen gitterförmigen Flansch gebildet ist, welcher mittels Drahtverbinder 4 am unteren Rand der Seitenwandelemente 3 befestigt ist. Die Grabsperre 2 ist durch jeweils mit einem Seitenwandelement 3 verbundenen Einzelelement 9a gebildet, die in ihrem Kontaktbereich mit benachbarten Einzelelementen 9a abgewinkelt sind, so dass ein ebener umlaufender Rand gebildet ist, der keine Überlappungen aufweist. Die Grabsperre 2 verhindert zuverlässig Grabungen im Bereich der Seitenwandelemente 3 durch im Innenraum des Tiergeheges 1 angeordnete Tiere. Zur Lagesicherung des Tiergeheges 1 dienen Bodenanker 6, welche sich im Eckbereich über die Grabsperre 2 erstrecken und diese im Boden befestigen.

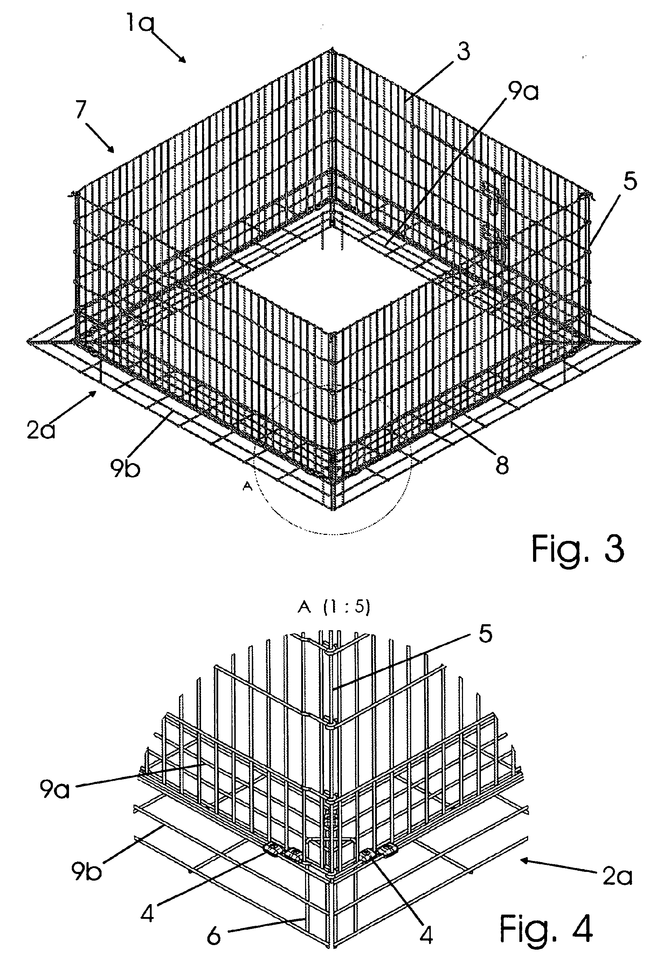

Figur 3 zeigt eine zweite Ausführungsform eines Kleintiergeheges 1a. Dieses unterscheidet sich von der zuvor dargestellten Ausführungsform des Kleintiergeheges 1 dadurch, dass die Grabsperre 2 a beiderseits der Seitenwandelemente 3 verläuft. Das Kleintiergehege 1a weist somit zusätzlich zu dem in Fig. 1 dargestellten Kleintiergehege 1 einen außenseitig umlaufenden, gitterförmigen Flansch auf, der aus vier Einzelelementen 9a, die jeweils mit einem Seitenwandelement 3 verbunden sind, gebildet ist. Die Einzelelemente 9a sind ihrerseits in bekannter Weise mittels Drahtverbinder 4 mit dem unteren Rand 8 der Seitenwandelemente 3 verbunden. Die Enden der außenseitigen Einzelelemente 9a sind schräg ausgebildet, so dass sie bündig aneinander anliegen, ohne zu überlappen. Die Grabsperre 2a verhindert zusätzlich, dass sich Tiere von außen vor der Seitenwand 7 unter dieser hindurchgraben.

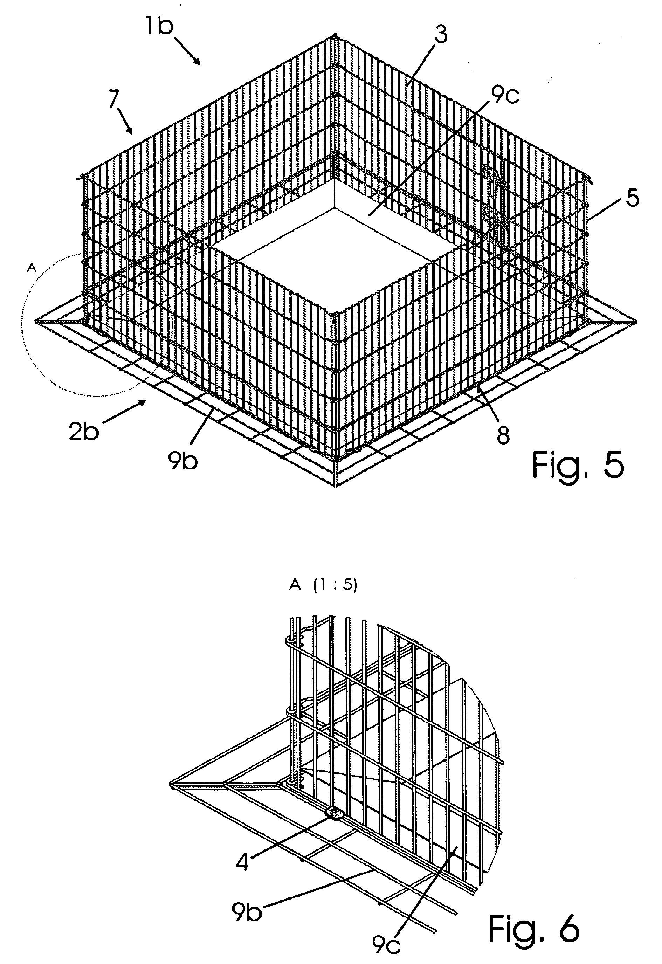

Eine dritte, in Figur 5 und Figur 6 dargestellte Ausführungsform eines Kleintiergeheges 1b weist wie das in Figur 3 und Figur 4 dargestellte Kleindergehege 1a einen außenseitig an der Seitenwand 3 umlaufenden, gitterförmige Flansch auf. Im Innenraum wird die Grabsperre 2b hingegen durch einen aus Profilelementen 9c hergestellten Ring 10 gebildet, der innen eingelegt an den Seitenwandelementen 3 anliegt. Die Profilelemente 9c sind abgeschrägt, so dass sie eine zum Innenraum abfallende, umlaufende Schräge bilden. Die Profilelemente 9 sind aus einem Vollkörper, bspw. Kunststoff gebildet und verhindern ebenfalls wirkungsvoll ein Untergraben der Seitenwand 3.

## Patentansprüche

1. Kleintiergehege zur temporären Bodenhaltung von Kleintieren im Freien, mit einer sich in der Gebrauchslage vom Boden aus in die Höhe erstreckenden Seitenwand, **dadurch gekennzeichnet, dass** die Seitenwand (7) im Bereich ihres in der Gebrauchslage bodenseitigen Rands (8) eine von der Seitenwand (7) vorstehende, einen umlaufenden Rand bildende Grabsperre (2) aufweist, die gelenkig mit der Seitenwand (7) verbunden ist.

2. Kleintiergehege nach Anspruch 1, **dadurch gekennzeichnet, dass** die Grabsperre (2) beiderseits der Seitenwand (7) von dieser vorsteht.

3. Kleintiergehege nach Anspruch 1 oder 2, **dadurch gekennzeichnet, dass** die Grabsperre (2) einstückig mit der Seitenwand (7) ausgebildet ist.

4. Kleintiergehege nach einem der vorhergehenden Ansprüche, **dadurch gekennzeichnet, dass** die Grabsperre (2) lösbar mit der Seitenwand (7) verbunden ist.

5. Kleintiergehege nach einem der vorhergehenden Ansprüche, **dadurch gekennzeichnet, dass** die Grabsperre (2) durch ein Drahtgitter gebildet ist.

6. Kleintiergehege nach einem der vorhergehenden Ansprüche, **dadurch gekennzeichnet, dass** die Grabsperre (2) im Bereich ihrer Enden mit einer in der Gebrauchslage benachbart angeordneten Grabsperre (2) in Eingriff bringbar ausgebildet ist.

7. Kleintiergehege nach einem der vorhergehenden Ansprüche, **dadurch gekennzeichnet, dass** die Seitenwand (7) zu einem umlaufenden Ring gebogen und/oder geknickt ist.

8. Kleintiergehege nach einem der vorhergehenden Ansprüche, **dadurch gekennzeichnet, dass** die Seitenwand (7) aus mindestens zwei lösbar miteinander verbundenen Seitenwandelementen (3) gebildet ist.

9. Kleintiergehege nach einem der vorhergehenden Ansprüche, **dadurch gekennzeichnet, dass** die Seitenwand (7) aus mindestens 3, vorzugsweise 4 rechteckigen Seitenwandelementen (3) gebildet ist, die lösbar miteinander verbunden sind.

10. Kleintiergehege nach einem der vorhergehenden Ansprüche, **dadurch gekennzeichnet, dass** die Grabsperren (2) derart ausgebildet sind, dass sie in der Gebrauchslage einen flächig umlaufenden Rand bilden.

## Claims

1. Enclosure for small animals for temporarily keeping small animals on the ground in the open air, comprising a side wall extending from the ground upwards in the position of use, **characterised in that** in the position of use the side wall (7) in the region of its edge (8) on the ground comprises an anti-burrowing device (2) protruding from the side wall (7) and forming a peripheral edge, and which is connected in an articulated manner to the side wall (7).

2. Enclosure for small animals according to Claim 1, **characterised in that** on both sides of the side wall (7) the anti-burrowing device (2) protrudes therefrom.

3. Enclosure for small animals according to Claim 1 or 2, **characterised in that** the anti-burrowing device (2) is integrally formed with the side wall (7).

4. Enclosure for small animals according to one of the preceding claims, **characterised in that** the anti-burrowing device (2) is releasably connected to the side wall (7).

5. Enclosure for small animals according to one of the preceding claims, **characterised in that** the anti-burrowing device (2) is formed from a wire mesh.

6. Enclosure for small animals according to one of the preceding claims, **characterised in that** the anti-burrowing device (2) in the region of its ends is configured to be able to brought into engagement with an anti-burrowing device (2) arranged adjacent in the position of use.

7. Enclosure for small animals according to one of the preceding claims, **characterised in that** the side wall (7) is bent and/or folded to form a peripheral ring.

8. Enclosure for small animals according to one of the preceding claims, **characterised in that** the side wall (7) is formed from at least two side wall elements (3) releasably connected together.

9. Enclosure for small animals according to one of the preceding claims, **characterised in that** the side wall (7) is formed from at least 3, preferably 4, rectangular side wall elements (3) which are releasably connected together.

10. Enclosure for small animals according to one of the preceding claims, **characterised in that** the anti-burrowing devices (2) are configured so that in the position of use they form a planar peripheral edge.

## Revendications

1. Enclos pour petits animaux pour l'élevage au sol temporaire de petits animaux en plein air, avec une paroi latérale s'étendant, dans la position d'utilisation, depuis le sol vers le haut, **caractérisé en ce que** la paroi latérale (7) présente, dans la zone de son bord (8) côté sol dans la position d'utilisation, une barrière anti-creusement (2), dépassant de la paroi latérale (7) et formant un bord périphérique, qui est raccordée de façon articulée à la paroi latérale (7).

2. Enclos pour petits animaux selon la revendication 1, **caractérisé en ce que** la barrière anti-creusement (2) dépasse de la paroi latérale (7) des deux côtés de celle-ci.

3. Enclos pour petits animaux selon la revendication 1 ou 2, **caractérisé en ce que** la barrière anti-creusement (2) est constituée d'un seul tenant avec la paroi latérale (7).

4. Enclos pour petits animaux selon une des revendications précédentes, **caractérisé en ce que** la barrière anti-creusement (2) est raccordée de façon détachable à la paroi latérale (7).

5. Enclos pour petits animaux selon une des revendications précédentes, **caractérisé en ce que** la barrière anti-creusement (2) est formée par une grille en fils métalliques.

6. Enclos pour petits animaux selon une des revendications précédentes, **caractérisé en ce que** la barrière anti-creusement (2) est, dans la zone de ses extrémités, constituée de façon à pouvoir être mise en prise avec une barrière anti-creusement (2) disposée à proximité dans la position d'utilisation.

7. Enclos pour petits animaux selon une des revendications précédentes, **caractérisé en ce que** la paroi latérale (7) est courbée et/ou coudée pour former un anneau périphérique.

8. Enclos pour petits animaux selon une des revendications précédentes, **caractérisé en ce que** la paroi latérale (7) est formée d'au moins deux éléments de paroi latérale (3) raccordés entre eux de façon détachable.

9. Enclos pour petits animaux selon une des revendications précédentes, **caractérisé en ce que** la paroi latérale (7) est formée d'au moins 3, de préférence 4, éléments de paroi latérale (3) rectangulaires qui sont raccordés entre eux de façon détachable.

10. Enclos pour petits animaux selon une des revendications précédentes, **caractérisé en ce que** les barrières anti-creusement (2) sont constituées de sorte que, dans la position d'utilisation, elles forment un bord périphérique en nappe.
